# FASCICULE DE BREVET EUROPEEN

(11) **EP 0 587 483 B1**
(45) Date de publication et mention de la délivrance du brevet: **28.05.1997**
(21) Numéro de dépôt: 93402157.7
(22) Date de dépôt: 03.09.1993
(51) Int. Cl.: B29C 45/53, B29C 45/18, B29C 45/58

(54) **Presse à injecter et utilisation de celle-ci**
Spritzgiesspresse und deren Verwendung
Injection press and use thereof

(30) Priorité: 09.09.1992 FR 9210771
(43) Date de publication de la demande: 16.03.1994
(73) Titulaire: Metals Process Systems, F-92100 Boulogne-Billancourt (FR)
(72) Inventeur: Peytavin, Pierre, F-92200 Neuilly s/Seine (FR); Quichaud, Claude, F-92100 Ville d'Avray (FR); Steger, Reinhard, D-7800 Freiburg (DE)
(74) Mandataire: Rinuy, Santarelli

(56) Documents cités:
- DE-A- 2 409 771
- DE-A- 4 018 484
- FR-A- 1 438 470
- US-A- 2 202 140
- US-A- 3 191 233
- US-A- 4 463 881

## Description

L'invention a trait à l'injection d'une matière dans un moule.

On connaît déjà une presse prévue pour l'injection des matières plastiques notamment pour les élastomères, qui comporte une tête d'injection présentant :
- un creux axial divisé en une chambre d'injection cylindrique dans laquelle est mobile un piston et en un conduit d'injection reliant ladite chambre d'injection à un orifice d'injection dans un moule, le conduit d'injection étant convergent à chaque extrémité, c'est-à-dire d'une part à sa jonction avec la chambre d'injection, et d'autre part juste avant l'orifice d'injection, à l'intérieur d'une buse amovible ;
- un conduit d'alimentation qui débouche dans le creux axial, et qui est relié à l'autre extrémité à un cylindre de plastification qui comporte sur l'extérieur des moyens de chauffage tandis que dans son alésage tourne une vis sans fin ;
- un clapet de non-retour à bille prévu sur le conduit d'alimentation, qui laisse celui-ci ouvert quand le piston se déplace dans la chambre d'injection en s'éloignant de l'orifice d'injection afin que celle-ci s'alimente alors en élastomère provenant du cylindre de plastification, et qui ferme sous l'effet de la pression d'injection le conduit d'alimentation quand le piston se déplace en se rapprochant de l'orifice d'injection afin que l'élastomère soit alors expulsé à travers l'orifice d'injection ; et
- un obturateur commandé disposé sur le conduit d'injection, pour obturer celui-ci quand le piston se déplace dans la chambre d'injection en s'éloignant de l'orifice d'injection, et pour laisser ouvert le conduit d'injection quand le piston se déplace en sens inverse.

L'invention vise à permettre l'injection d'une matière susceptible de former des dépôts, notamment une suspension de particules, telles que des particules métalliques ou de céramiques, ainsi que de leur mélange, du genre décrit dans les documents WO-A-8807902 et WO-A-8807903, et plus généralement de boues ou de plastiques chargés.

Les inventeurs ont en effet trouvé que même en y supprimant les moyens de plastification, la presse à injecter classique précitée, n'est pas capable de fonctionner correctement avec de telles matières.

L'invention propose, sous un premier aspect, l'utilisation caractérisée dans la revendication 1.

La presse dont l'invention propose l'utilisation permet d'éviter qu'il y ait démélange de la suspension, c'est-à-dire qu'il y ait des particules qui se séparent du reste de la suspension, celles-ci formant alors des dépôts qui empêchent le fonctionnement correct de la tête d'injection.

Ainsi, contrairement à la presse antérieure précitée, il n'y a pas de clapet de non-retour à bille dans la presse dont l'invention propose l'utilisation, parce que les particules se seraient déposées sur le siège conique de ce clapet, qui finirait par être colmaté à un point où il ne serait plus en mesure d'assurer lorsque nécessaire la fermeture étanche du conduit d'alimentation.

En revanche, le fait de prévoir un obturateur commandé dans les moyens de non-retour du conduit d'alimentation, l'obturateur ayant un passage qui fait partie de ce conduit lorsqu'il est ouvert, permet d'éviter ce risque de défaut d'étanchéité puisque fermer l'obturateur revient à supprimer une partie du conduit d'alimentation.

Bien entendu, les explications qui précèdent pour les moyens de non-retour du conduit d'alimentation valent aussi pour ceux du conduit d'injection.

Le caractère confondus ou adjacents des obturateurs du conduit d'alimentation et du conduit d'injection, fait que le volume du conduit d'alimentation qui est mis sous pression lors de l'injection de la matière, est nul (obturateurs confondus) ou pratiquement nul (obturateurs adjacents), ce qui est favorable à la prévention du phénomène de démélange. Les inventeurs ont en effet trouvé que les mises sous pression répétées d'un même volume de suspension conduisaient celui-ci à se démélanger.

Le fait de disposer le ou les obturateur(s) à proximité de l'orifice d'injection est également favorable à la prévention du phénomène de démélange, pour la même raison puisque plus l'on se rapproche de l'orifice d'injection, plus petit sera le volume de suspension qui sera mis sous pression sans avoir été injecté dans le moule.

Le fait d'être proche de l'orifice d'injection offre également l'avantage de limiter la quantité de matière restant entre l'orifice d'injection et l'obturateur du conduit d'injection, et donc de limiter les risques que de la matière provenant de ce volume ne s'écoule extérieurement pendant la phase de remplissage, des dépôts pouvant se produire sur le pourtour extérieur de l'orifice d'injection par suite de cet écoulement, ces dépôts pouvant provoquer un défaut d'étanchéité entre le moule et la tête d'injection, et par conséquent des fuites lors de la phase d'injection, pouvant conduire à un remplissage incomplet du moule.

On notera que le terme "adjacents" signifie que les obturateurs sont aussi proches l'un de l'autre qu'il est possible de le faire avec des contraintes pratiques de réalisation qui restent raisonnables, et que l'expression "à proximité" doit être comprise avec un sens similaire. A titre d'exemple, on pourra noter que la partie la plus éloignée de l'obturateur ou des obturateurs devrait se situer à moins de dix centimètres de l'orifice d'injection, et que le volume de matière mis sous pression lors de l'injection sans être injecté devrait rester inférieur à 30 % du volume total mis sous pression.

L'invention propose également, sous un deuxième aspect, la presse caractérisée dans la revendication 3, qui convient particulièrement bien à l'injection d'une matière susceptible de former des dépôts.

On observera que les caractéristiques selon lesquelles le passage d'un obturateur commandé qui forme une portion du conduit d'injection lorsqu'il est ouvert, est convergent vers l'orifice d'injection, permettent d'augmenter la longueur sur laquelle se rétrécit le conduit d'injection, et donc de limiter son taux de rétrécissement, de sorte qu'on peut avoir un conduit d'injection qui satisfait aux deux exigences d'être à la fois court et à faible taux de rétrécissement.

Dans une forme préférée de réalisation particulièrement compacte, l'obturateur commandé du conduit d'alimentation et celui du conduit d'injection sont confondus en un seul obturateur tournant à trois voies admettant une position de remplissage où le conduit d'injection est obturé tandis que le conduit d'alimentation est ouvert, et une position d'injection où le conduit d'injection est ouvert et le conduit d'alimentation obturé.

Une presse à injecter avec un tel obturateur est par exemple connue de US-A-3.191.233, exclusivement prévue pour une matière plastique provenant d'une extrudeuse à vis sans fin, tous les passages de l'obturateur de cette presse étant de diamètre restant constant, le creux axial de cette presse comportant un conduit d'injection présentant à sa jonction avec la chambre d'injection, un rétrécissement brutal.

De préférence, ledit obturateur à trois voies présente un passage en T avec une portion diamétrale entre une première et une deuxième voies, et une portion radiale entre la portion diamétrale et une troisième voie ; dans ladite position de remplissage le trajet situé entre les première et troisième voies fait partie du conduit d'alimentation, la deuxième voie étant obturée tandis que la portion radiale est coaxiale au conduit d'injection avec la troisième voie en regard de la chambre d'injection ; dans ladite position d'injection la troisième voie est obturée tandis que la portion diamétrale est coaxiale à et fait partie du conduit d'injection avec la première voie en regard de la chambre d'injection et la deuxième voie en regard de l'orifice d'injection ; et dans une position de nettoyage, aucune desdites première, deuxième et troisième voies n'est obturée, le trajet situé entre les troisième et deuxième voies faisant partie du conduit d'alimentation tandis que la portion diamétrale est coaxiale et fait partie du conduit d'injection avec la deuxième voie en regard de la chambre d'injection et la première voie en regard de l'orifice d'injection.

Avec ces caractéristiques, l'obturateur présente des qualités auto-nettoyantes. On voit en effet que chaque partie du passage formant un recoin - respectivement dans la position de remplissage la partie de la portion diamétrale située entre la portion radiale et la deuxième voie, et dans la position d'injection la portion radiale - se trouve dans la position opposée, sur le trajet de circulation de la suspension. Par conséquent, les éventuels dépôts formés dans un recoin à l'une des positions, seront entraînés par le flux de suspension dans l'autre position.

Toujours sous son deuxième aspect, l'invention propose alternativement la presse caractérisée dans la revendication 6, qui elle aussi convient particulièrement bien à l'injection d'une matière susceptible de former des dépôts, mais est moins économique que la précédente, l'obturateur commandé du conduit d'alimentation et celui du conduit d'injection étant distincts.

Dans une forme préférée de réalisation, l'obturateur du conduit d'injection est tournant et à deux voies entre lesquelles il comporte un passage diamètral.

Il n'y a donc pas de partie commune entre le conduit d'alimentation et le conduit d'injection (dans la presse précédente, la partie de la portion diamétrale située entre la première voie et la portion radiale est commune), on évite donc d'avoir à faire un compromis entre des impératifs contradictoires, et notamment d'une part que le conduit d'alimentation ait un diamètre aussi proche que possible de celui de la chambre d'injection et d'autre part que le conduit d'injection converge dans le passage de l'obturateur.

Les revendications 7 à 12 visent des caractéristiques préférentielles de la présente presse.

Selon des caractéristiques préférées de chacune des presses conforme à l'invention, chaque partie convergente du conduit d'injection a un rétrécissement de diamètre inférieur à 3 mm par cm de longueur axiale.

Ces caractéristiques reviennent à éviter qu'il existe un étranglement dans le conduit d'injection, contrairement aux presses antérieures précitées où le conduit d'injection comporte à sa jonction avec la chambre d'injection un rétrécissement conique avec un fort taux de convergence, ce rétrécissement y servant d'ailleurs de butée pour le bout conique du piston.

Il se produirait en effet un dépôt de particules sur de tels étranglement ou rétrécissement.

Selon d'autres caractéristiques préférées, le conduit d'alimentation a un diamètre égal ou légèrement inférieur à celui de la chambre d'injection, et ne comporte aucun rétrécissement.

Ces caractéristiques sont également favorables à la prévention du phénomène de démélange.

Les inventeurs pensent au stade actuel que ce phénomène est essentiellement dû aux accélérations et effets de cisaillement auxquels la suspension est soumise, le fait que les particules ont une densité supérieure aux autres composants de la suspension ayant pour résultat qu'en cas d'accélération les particules sont soumises à des efforts dynamiques différents (plus élevés).

Les phénomènes de démélange seraient ainsi prévenus parce qu'avec les caractéristiques précédentes, d'une part on maximise le diamètre du conduit d'alimentation, et donc on minimise la vitesse d'écoulement dans celui-ci de sorte qu'on minimise également les accélérations se produisant entre le moment où la suspension est à l'arrêt et celui où elle atteint la vitesse maximum d'écoulement, et d'autre part on évite les accélérations locales provoquées par les rétrécissements.

Selon d'autres caractéristiques préférées, l'obturateur commandé du conduit d'alimentation et celui du conduit d'injection, admet ou admettent une configuration de nettoyage de la tête, où tant le conduit d'alimentation que le conduit d'injection sont ouverts.

Cette configuration de nettoyage, dans laquelle on met la tête d'injection uniquement lors des opérations d'entretien (et non en service normal) convient particulièrement bien pour effectuer un nettoyage complet de la tête d'injection, où l'on enlève en totalité les éventuels dépôts qui auraient pu s'y former.

Selon d'autres caractéristiques préférées, le conduit d'alimentation, dans sa configuration ouverte, comporte lorsqu'on se rapproche du creux axial, un tronçon oblique orienté selon une direction faisant un angle aigu avec la direction axiale dudit creux, puis un tronçon vertical transversal à la direction axiale ; le tronçon vertical comportant à l'opposé du creux axial un prolongement fermé par un bouchon.

Le tronçon oblique, auquel se raccorde un tuyau d'alimentation en matière à injecter, permet à ce tuyau de se raccorder à un emplacement très rapproché de l'orifice d'injection, sans être gêné par exemple par une plaque dans laquelle doit passer l'extrémité de la tête d'injection pour parvenir au moule, et en même temps on permet de prévoir de façon simple et commode des moyens complémentaires de nettoyage de la tête d'injection.

Selon d'autres caractéristiques préférées, le piston comporte une surface concave en regard du conduit d'injection, avec une portion saillante au moins en partie basse.

Le bout du piston forme ainsi une sorte de pelle qui peut décoller les éventuels dépôts s'étant formés notamment en partie basse de la zone dans laquelle le conduit d'alimentation débouche dans le creux axial, les particules décollées étant récupérées dans le creux de la "pelle" et se remélangeant spontanément avec la suspension provenant du conduit d'alimentation lors du remplissage qui suit.

Selon d'autres caractéristiques préférées, la presse comporte en outre une unité d'alimentation en matière à injecter, reliée à ladite tête d'injection par un tuyau qui se raccorde audit conduit d'alimentation, ladite unité d'alimentation comportant une pompe doseuse de gavage entre une trémie contenant de la matière à injecter et un raccordement audit tuyau, ladite pompe doseuse de gavage, placée de préférence adjacente à la trémie et au-dessous de cette dernière, comportant un cylindre présentant un alésage divisé en une chambre doseuse dans laquelle est mobile un piston et en une première canalisation située entre la chambre doseuse et ledit raccordement, une deuxième canalisation reliant à la première canalisation un raccordement prévu pour la trémie, un obturateur tournant à trois voies étant disposé à la jonction entre les première et deuxième canalisations, cet obturateur admettant une position d'admission où il relie la chambre doseuse à la deuxième canalisation tandis qu'il isole la chambre doseuse de la première canalisation, et une position de refoulement où il relie la chambre doseuse à la première canalisation tandis qu'il isole la chambre doseuse de la deuxième canalisation.

On notera que cette unité d'alimentation convient particulièrement pour la presse qui vient d'être exposée, mais qu'elle est susceptible d'être utilisée indépendamment, notamment avec des presses convenant pour injecter des matières plastiques.

L'exposé de l'invention sera maintenant poursuivi par la description de deux exemples de réalisation, donnée ci-après à titre illustratif et non limitatif, en référence aux dessins annexés sur lesquels :
- la figure 1 est une élévation-coupe prise longitudinalement dans une tête d'injection d'une presse conforme à l'invention pour l'injection d'une suspension de particules, dans la configuration qu'elle adopte au début de la phase de remplissage ;
- la figure 2 est une vue similaire à la figure 1, la tête d'injection étant montrée dans la configuration qu'elle adopte à la fin de la phase d'injection ;
- la figure 3 montre d'une façon similaire à la figure 2 une variante de réalisation de la tête d'injection ; et
- les figures 4 et 5 sont des élévations-coupe prises longitudinalement dans une unité d'alimentation de la tête, l'unité étant montrée sur la figure 4 dans la configuration qu'elle adopte au début d'une phase d'admission, et sur la figure 5 dans la configuration au début d'une phase de refoulement.

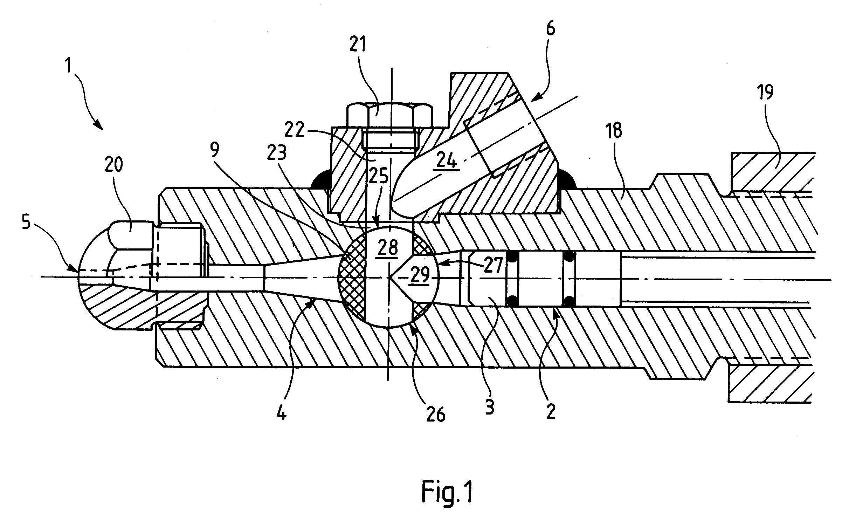

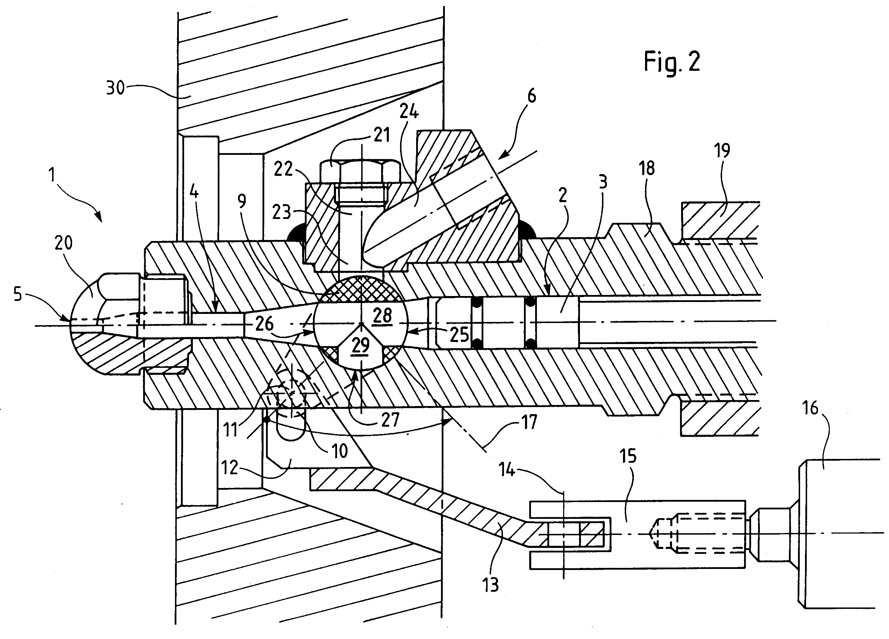

La tête d'injection 1 montrée sur les figures 1 et 2, comporte un creux axial divisé en une chambre d'injection cylindrique 2 dans laquelle est mobile un piston 3, et en un conduit d'injection convergent 4 qui relie la chambre d'injection cylindrique 2 à un orifice 5 d'injection dans un moule.

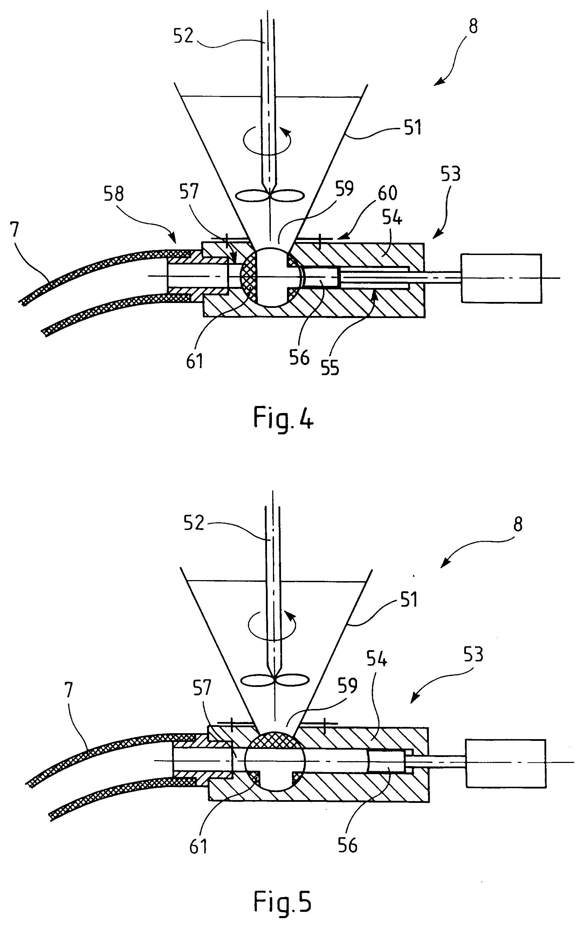

Pour alimenter le creux axial, la tête 1 comporte un conduit d'alimentation 6 relié du côté extérieur à l'une des extrémités d'un tuyau souple 7 dont l'autre extrémité (voir figures 4 et 5) est raccordée à une unité 8 d'alimentation en suspensions à injecter.

Dans la configuration montrée sur la figure 1, la portion du conduit d'alimentation 6 située à son extrémité côté creux axial, est formée par un passage d'un obturateur tournant 9 qui ferme alors le conduit d'injection 4. Au contraire, dans la configuration montrée sur la figure 2, le conduit 6 est fermé par l'obturateur 9 dont un passage forme une portion du conduit d'injection 4.

La configuration montrée sur la figure 1 est celle que prend la tête d'injection 1 au début d'une phase de remplissage en suspension à injecter, le piston 3 se déplaçant ensuite vers la droite de la figure 1 tandis que de la suspension s'écoule vers le creux axial par le conduit d'alimentation 6. Après que le piston 3 a parcouru une distance prédéterminée, il s'arrête et l'obturateur 9 est tourné pour être mis dans la position montrée sur la figure 2. Le piston 3 se déplace alors dans la chambre d'injection 2 vers la gauche, c'est-à-dire qu'il se rapproche de l'orifice d'injection 5 par lequel est alors expulsée de la suspension. Lorsque le piston 3 est parvenu à la position illustrée sur la figure 2, l'injection dans le moule est terminée.

On voit que l'obturateur tournant 9 sert à la fois d'obturateur pour le conduit d'injection 4 et d'obturateur pour le conduit 6, ainsi que de moyen de non-retour prévu sur le conduit d'injection 4 dans la configuration de la figure 1, et de moyen de non-retour prévu sur le conduit 6 dans la configuration de la figure 2.

Les moyens pour commander l'obturateur tournant 9 sont représentés uniquement sur la figure 2. Ils comportent un levier 10 solidaire de l'obturateur tournant 9 et muni à l'opposé de celui-ci d'un doigt 11 engagé dans une lumière verticale d'une console 12 solidarisée à une extrémité d'une tringle 13 dont l'autre extrémité est articulée autour d'un axe 14 sur une chape 15 solidarisée à la tige 16 d'un vérin solidaire de la tête 1.

Pour faire passer l'obturateur tournant 9 de la position de la figure 2 (position d'injection) à la position de la figure 1 (position de remplissage), on commande le vérin pour faire se déplacer la tige 15 le long de son axe vers la droite de la figure 2, jusqu'à ce que le levier 10 ait atteint la position schématisée par l'axe 17.

Bien entendu, pour passer de la position de remplissage à la position d'injection, on procède de façon similaire, mais en sens inverse en faisant se déplacer la tige 15 vers la gauche de la figure 2.

La console 12 se maintient entre le levier 10 et une goupille démontable du doigt 11. Il est possible de libérer le levier 10 des autres éléments de commande de l'obturateur tournant 9, en démontant ladite goupille, et en faisant basculer le levier 13 et la console 12 autour de l'axe 14 jusqu'à dégager le doigt 11 de la lumière de la console 12. Après avoir procédé à ce démontage, on peut amener l'obturateur tournant 9 dans une position de nettoyage où le levier 10 est dans une position diamétralement opposée à celle montrée sur la figure 2. On voit que dans cette position, tant le conduit d'injection 4 que le conduit 6 sont ouverts.

Plus précisément, pour réaliser ce nettoyage, on démonte l'extrémité de la tête 1, en désolidarisant par dévissage le corps 18 du cylindre 19, le piston 3 s'extrayant alors de la chambre 2. On démonte également la buse 20 au bout de laquelle se trouve l'orifice 5, ainsi que le bouchon 21 qui obture un prolongement 22 du tronçon vertical 23 du conduit 6, tronçon vertical auquel se raccorde un tronçon oblique 24 faisant un angle aigu avec la direction du creux axial.

Après avoir effectué ces démontages, on envoie du fluide vers l'obturateur tournant 9 mis dans la position de nettoyage, à la fois par la chambre 2, par le conduit d'alimentation 6 et par le prolongement 22, le fluide de nettoyage sortant par le conduit d'injection 4. En procédant ainsi, on élimine à coup sûr les éventuels dépôts de particules qui se seraient formées pendant le fonctionnement de la tête 1.

On pourra aussi effectuer le nettoyage de la tête d'injection sans aucun démontage de celle-ci, simplement en retirant complètement le piston 3 de l'alésage 2 et en injectant du fluide de nettoyage, notamment de l'eau ou un autre solvant approprié, à la fois dans l'alésage 2 et le prolongement 22.

Pour réaliser les différentes connexions que l'on vient d'expliquer, l'obturateur tournant 9 comporte un passage en T entre les trois voies 25, 26 et 27, ce passage comportant une portion diamétrale 28 entre les voies 25 et 26 et une portion radiale 29 entre la portion 28 et la voie 27.

Dans la position de remplissage (figure 1) le trajet situé entre les voies 25 et 27 fait partie du conduit d'alimentation 6, la voie 26 étant obturée tandis que la portion 29 est coaxiale au conduit d'injection 4 avec la voie 27 en regard de la chambre d'injection 2.

Dans la position d'injection (figure 2) la voie 27 est obturée tandis que la portion diamétrale 28 est coaxiale à et fait partie du conduit d'injection 4 avec la voie 25 en regard de la chambre d'injection 2 et la voie 26 en regard de l'orifice 5.

Enfin, dans la position de nettoyage, aucune des voies 25, 26 et 27 n'est obturée, le trajet situé entre les voies 27 et 26 faisant partie du conduit 6 tandis que la portion 28 est coaxiale à et fait partie du conduit d'injection 4 avec la voie 26 en regard de l'alésage 2 et la voie 25 en regard de l'orifice 5.

On observera que dans la position de remplissage (figure 1), la partie de la portion 28 située entre la voie 26 et la portion 29, forme un recoin dans lequel peuvent se déposer des particules de suspension, et qu'il en est de même pour la portion 29 dans la position d'injection (figure 2).

Chacun de ces recoins sera toutefois nettoyé lorsque l'obturateur 9 va passer dans l'autre position puisque le recoin qui existe dans la position de remplissage fait partie du conduit d'injection 4 dans la position d'injection, et que le recoin qui existe dans la position d'injection fait partie du conduit 6 dans la position de remplissage, de sorte que les éventuelles particules accumulées dans un recoin dans l'une des positions, en sont éliminées dans l'autre position par la circulation de la suspension.

Dans l'exemple illustré, la tête d'injection 1 est mobile le long de son axe afin que le pourtour de l'orifice 5 puisse venir coopérer de façon étanche avec un moule dans lequel on injecte la suspension, la tête s'éloignant du moule après injection.

Ainsi, le cycle complet de fonctionnement est le suivant : la tête étant en position éloignée du moule avec l'obturateur tournant 9 en position de remplissage et le piston 3 le plus rapproché possible de l'orifice 5 (figure 1), la tête 1 est alimentée en suspension à injecter pendant que recule le piston 3, le volume de la chambre d'injection 2 dégagé par le recul du piston 3 se remplissant de suspension qui rentre dans la tête par le conduit 6 ; lorsque la tête 1 est remplie, elle avance jusqu'à ce que le pourtour de l'orifice 5 soit en contact avec le moule ; l'obturateur tournant 9 passe alors dans la position d'injection et le piston 3 se déplace jusqu'à sa position d'avancement maximum (figure 2), le moule recevant alors un volume de suspension égal à celui dont a diminué l'alésage 2 du fait du déplacement du piston 3 ; on reste dans cette position (maintien sous pression) jusqu'à solidification ou prise de la suspension dans le moule ; la tête d'injection recule ensuite, l'obturateur tournant 9 repasse à la position de remplissage, et le cycle se renouvelle.

Si nécessaire, après solidification de la suspension dans le moule et avant recul de la tête 1, on peut prévoir un léger recul du piston 3 pour éviter qu'il y ait de la suspension qui s'écoule par l'orifice 5 alors que le pourtour de celui-ci n'est plus en contact avec le moule.

Comme on le voit sur la figure 2, la presse comporte à proximité du moule une plaque 30 relativement épaisse par un orifice de laquelle doit passer la tête 1 pour rejoindre le moule.

Malgré la plaque 30, l'obturateur 9 a pu être disposé à proximité de l'orifice 5, grâce à la portion oblique 24 du conduit 6, qui a permis de disposer l'obturateur 9 dans l'encombrement de la plaque 30 (voir figure 2).

Dans l'exemple illustré, la presse a un bâti dimensionné pour l'injection d'un plastique, afin qu'elle puisse servir aussi pour cette matière en changeant la tête d'injection. Dans le cas où l'on fabrique une presse destinée uniquement à l'injection d'une suspension, on peut réduire considérablement l'épaisseur de la plaque 30, et en rapprocher fortement le moule, ce qui permettrait d'une part de rapprocher l'obturateur 9 de la buse 20, et d'autre part de raccourcir celle-ci, afin de réduire encore la distance entre l'obturateur et l'orifice d'injection 5.

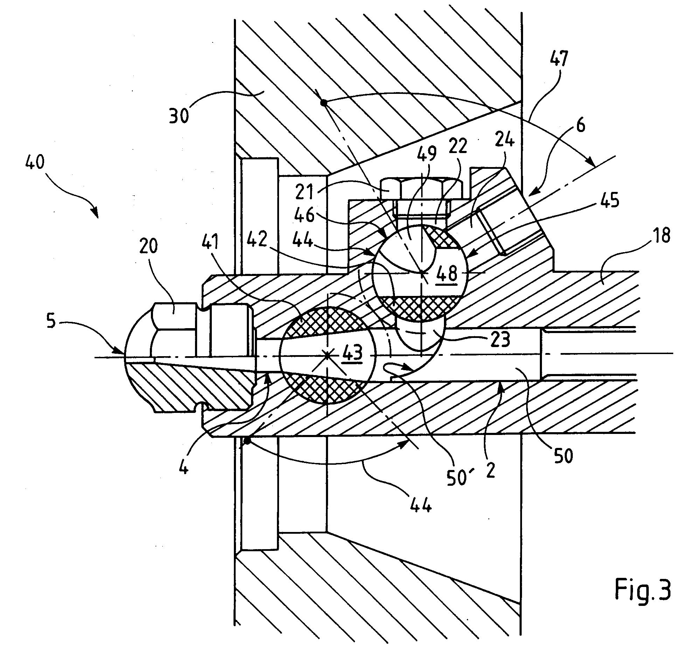

Dans la variante montrée sur la figure 3, la tête 40, tant dans sa structure que dans son fonctionnement, est similaire à la tête 1 (on a gardé les mêmes références numériques pour les éléments semblables), mais l'obturateur commandé 9 commun au conduit d'injection 4 et au conduit 6 est remplacé par des obturateurs distincts, respectivement 41 pour le conduit d'injection 4 et 42 pour le conduit 6.

L'obturateur tournant 41 du conduit d'injection 4 est à deux voies entre lesquelles il comporte un passage diamétral 43. Dans la position illustrée, l'obturateur 41 laisse ouvert le conduit d'injection 4, dont le passage 43 forme une portion. Pour fermer le conduit d'injection 4, on peut faire tourner l'obturateur 41 de 90°, comme montré par la flèche 44.

L'obturateur tournant 42 est disposé à la jonction entre le tronçon oblique 24, le tronçon vertical 23 et le prolongement 22. Il comporte un passage en Y avec trois voies 44, 45 et 46. Dans la position illustrée sur la figure 3 (position d'injection) l'obturateur 42 ferme le conduit 6. Si l'on tourne cet obturateur de 90° comme montré par la flèche 47, l'obturateur 42 sera dans une position de remplissage où le conduit d'alimentation 6 sera ouvert et communique avec le prolongement 22.

Le passage en Y de l'obturateur 42 comporte une portion diamétrale 48 entre les voies 44 et 45, et une portion radiale 49 entre la portion 48 et la voie 46.

Dans la position de remplissage, le trajet situé entre les voies 46 et 45 fait partie du conduit 6, la portion 48 étant coaxiale au tronçon vertical 23 et au prolongement 22 avec la voie 44 en regard du prolongement 22 et la voie 45 en regard du creux axial, tandis que la portion 49 est coaxiale au tronçon oblique 24 avec la voie 46 en regard de celui-ci.

Dans la position d'injection (figure 3) la portion 48 est transversale au tronçon 23 et au prolongement 22, avec la portion 49 au-dessus de la portion 48.

Entre les obturateurs 41 et 42 est prévue une transmission, ici formée par des secteurs dentés dont seules sont illustrées les lignes primitives, pour que quand le passage 43 de l'obturateur 41 fait partie du conduit d'injection 4 alors l'obturateur 42 est dans la position d'injection (figure 3), et pour que quand l'obturateur 41 ferme le conduit d'injection 4 alors l'obturateur 42 est dans la position de remplissage.

La transmission entre les obturateurs 41 et 42 est adaptée à ce que quand l'obturateur 41 tourne comme montré par la flèche 44, alors l'obturateur 42 tourne comme montré par la flèche 47 (passage de la position d'injection à la position de remplissage), et de même en sens inverse (passage de la position de remplissage à la position d'injection).

La transmission entre les obturateurs 41 et 42 est prévue pour être désaccouplée, ici en enlevant la goupille qui couple l'un des secteurs à l'obturateur 42, ce qui permet de mettre la tête 40 dans une position de nettoyage où l'obturateur 41 est dans la position illustrée, et l'obturateur 42 dans la position où il laisse ouvert le conduit 6.

La commande des obturateurs 41 et 42 n'est pas représentée, mais est similaire à celle de l'obturateur 9, un levier semblable au levier 10 étant monté sur l'obturateur 41.

Dans la tête 40, le piston 3 est remplacé par un piston 50 qui comporte à son extrémité une surface concave 50' en regard du conduit d'injection, avec une portion saillante au moins en partie basse.

Le bout du piston 50 forme ainsi une sorte de pelle qui peut décoller les éventuels dépôts s'étant formés en partie basse de la zone par laquelle le conduit 6 débouche dans le creux axial.

Afin de maintenir la portion en saillie en partie basse, des moyens sont prévus pour empêcher que le piston 50 ne tourne sur lui-même.

On observera, aussi bien dans la tête 1 que dans la tête 40, que chaque partie convergente du conduit d'injection a un taux de rétrécissement particulièrement faible, ici inférieur à 3 mm par cm de longueur axiale. On notera également que les portions 28 et 43 des obturateurs 9 et 41, qui forment une portion du conduit d'injection 4 lorsqu'il est ouvert, sont chacune convergentes vers l'orifice d'injection.

On notera aussi que le conduit 6 a un diamètre qui est très légèrement inférieur à celui de l'alésage 2, et qu'il ne comporte aucun rétrécissement.

L'unité d'alimentation 8 en suspension comporte une trémie 51 contenant de la suspension à injecter, avec un agitateur 52 qui tourne dans celle-ci pour maintenir la suspension homogène. Entre la trémie 51 et le tuyau souple 7 est prévue une pompe doseuse de gavage 53 qui comporte un cylindre 54 présentant un alésage divisé en une chambre doseuse 55 dans laquelle est mobile un piston 56, et en une canalisation 57 située entre la chambre 55 et un raccordement 58 au tuyau 7, une canalisation 59 reliant à la canalisation 57 un raccordement 60 prévu pour la trémie.

Un obturateur 61 tournant à trois voies est disposé à la jonction entre les canalisations 59 et 57. Il admet une position d'admission (figure 4) où il relie la chambre doseuse 55 à la canalisation 59 tandis qu'il isole la chambre 55 de la canalisation 57, et une position de refoulement (figure 5) où il relie la chambre 55 à la canalisation 57 tandis qu'il isole la chambre de la canalisation 59.

Le cycle de fonctionnement est le suivant : l'obturateur 61 est placé dans la position d'admission avec le piston 56 avancé au maximum (figure 4) ; le piston 56 recule d'une façon prédéterminée de sorte qu'un volume prédéterminé (une dose) de suspension contenue dans la trémie 51 rentre dans le cylindre 54 ; on fait tourner l'obturateur 61 pour le mettre dans la position de refoulement (figure 5) ; et on fait avancer le piston 56 pour refouler par le tuyau 7 ledit volume prédéterminé de suspension ; on fait tourner l'obturateur 61 pour le ramener en position de remplissage ; et le cycle se renouvelle.

On observera que la pompe doseuse de gavage 53 a une structure et un fonctionnement tout à fait similaires à ceux de la tête 1.

Dans la presse illustrée, on a choisit de laisser reculer le piston 3 ou 50 dans les phases de remplissage de la tête sous l'effet de l'avancée du piston 56. On pourrait également choisir de commander les pistons 56 et 3 ou 50 pour obtenir un fonctionnement similaire.

L'intérêt d'utiliser la pompe 53 est d'éviter de remplir la tête 1 ou 40 par succion de la suspension, et d'avoir des risques de cavitation et de formation de bulles d'air au sein de la suspension à injecter ; et également de doser très précisément le volume de suspension qui va dans la tête d'injection.

Lorsqu'on ne souhaite pas effectuer un tel dosage et qu'il n'y a pas de risque de cavitation, on peut raccorder directement le tuyau 7 à la trémie 51.

La presse à injecter précédemment décrite a été conçue spécialement pour des suspensions de particules, mais elle est susceptible de convenir à d'autres matières à injecter.

Cette presse peut notamment être utilisée pour mettre en oeuvre des procédés cryogéniques d'injection ou de coulée sous pression, où la solidification de la pièce dans le moule ou empreinte est obtenue par congélation dans celui-ci ou celle-ci de la suspension ou matière injectée ou coulée, mais convient également pour d'autres procédés d'injection.

On rappelle que l'invention ne se limite pas aux exemples décrits et représentés.

## Revendications

1. Utilisation, pour injecter une matière susceptible de former des dépôts telle qu'une suspension de particules, notamment de particules métalliques ou de céramiques, une boue, ou une matière plastique avec des charges ; d'une presse à injecter, comportant une tête d'injection (1, 40) présentant :
- un creux axial divisé en une chambre d'injection cylindrique (2) dans laquelle est mobile un piston (3, 50) et en un conduit d'injection (4) reliant ladite chambre d'injection (2) à un orifice (5) d'injection dans un moule ;
- un conduit d'alimentation (6) qui débouche dans ledit creux axial ; et
- des moyens de non-retour sur le conduit d'injection (4) et sur le conduit d'alimentation (6), pour obturer le conduit d'injection et laisser ouvert le conduit d'alimentation quand le piston se déplace dans la chambre d'injection (2) en s'éloignant de l'orifice d'injection (5) afin que le creux axial s'alimente alors en matière à injecter, et pour ouvrir le conduit d'injection et fermer le conduit d'alimentation quand le piston se déplace en se rapprochant de l'orifice d'injection afin que de la matière à injecter soit alors expulsée à travers l'orifice d'injection ;
presse dans laquelle une portion du conduit d'alimentation (6) et une portion du conduit d'injection (4), lorsque l'un ou l'autre est ouvert, est formée par un passage d'un obturateur commandé extérieurement (9 ; 41, 42) faisant partie desdits moyens de non-retour, l'obturateur commandé du conduit d'alimentation et celui du conduit d'injection étant confondus ou adjacents, et disposés à proximité de l'orifice d'injection (5).

2. Utilisation selon la revendication 1 pour mettre en oeuvre des procédés cryogéniques d'injection ou de coulée sous pression, où la solidification de la pièce dans le moule ou empreinte est obtenue par congélation dans celui-ci ou celle-ci de la suspension ou matière injectée ou coulée.

3. Presse à injecter convenant à l'utilisation selon l'une quelconque des revendications 1 ou 2, caractérisée en ce qu'elle comporte une tête d'injection (1) présentant :
- un creux axial divisé en une chambre d'injection cylindrique (2) dans laquelle est mobile un piston (3) et en un conduit d'injection (4) reliant ladite chambre d'injection (2) à un orifice (5) d'injection dans un moule ;
- un conduit d'alimentation (6) qui débouche dans ledit creux axial ; et
- des moyens de non-retour sur le conduit d'injection (4) et sur le conduit d'alimentation (6), pour obturer le conduit d'injection et laisser ouvert le conduit d'alimentation quand le piston se déplace dans la chambre d'injection (2) en s'éloignant de l'orifice d'injection (5) afin que le creux axial s'alimente alors en matière à injecter, et pour ouvrir le conduit d'injection et fermer le conduit d'alimentation quand le piston se déplace en se rapprochant de l'orifice d'injection afin que de la matière à injecter soit alors expulsée à travers l'orifice d'injection ;
et en ce qu'une portion du conduit d'alimentation (6) et une portion du conduit d'injection (4), lorsque l'un ou l'autre est ouvert, est formée par un passage d'un obturateur commandé extérieurement (9) faisant partie desdits moyens de non-retour, l'obturateur commandé du conduit d'alimentation et celui du conduit d'injection étant confondus, et disposés à proximité de l'orifice d'injection (5), ledit passage (28) d'un obturateur commandé (9) qui forme une portion du conduit d'injection (4) lorsqu'il est ouvert, étant convergent vers l'orifice d'injection (5).

4. Presse selon la revendication 3, caractérisée en ce que l'obturateur commandé du conduit d'alimentation et celui du conduit d'injection sont confondus en un seul obturateur tournant (9) à trois voies admettant une position de remplissage où le conduit d'injection (4) est obturé tandis que le conduit d'alimentation (6) est ouvert, et une position d'injection où le conduit d'injection est ouvert et le conduit d'alimentation obturé.

5. Presse selon la revendication 4, caractérisée en ce que ledit obturateur à trois voies (9) présente un passage en T avec une portion diamétrale (28) entre une première et une deuxième voies (25, 26), et une portion radiale (29) entre la portion diamétrale (28) et une troisième voie (27) ; en ce que dans ladite position de remplissage le trajet situé entre les première et troisième voies (25, 27) fait partie du conduit d'alimentation (6), la deuxième voie (26) étant obturée tandis que la portion radiale (29) est coaxiale au conduit d'injection (4) avec la troisième voie (27) en regard de la chambre d'injection (2) ; en ce que dans ladite position d'injection la troisième voie (27) est obturée tandis que la portion diamétrale (28) est coaxiale à et fait partie du conduit d'injection (4) avec la première voie (25) en regard de la chambre d'injection (2) et la deuxième voie (26) en regard de l'orifice d'injection (5) ; et en ce que dans une position de nettoyage, aucune desdites première, deuxième et troisième voies n'est obturée, le trajet situé entre les troisième et deuxième voies (27, 26) faisant partie du conduit d'alimentation (6) tandis que la portion diamétrale (28) est coaxiale à et fait partie du conduit d'injection (4) avec la deuxième voie (26) en regard de la chambre d'injection (2) et la première voie (25) en regard de l'orifice d'injection (5).

6. Presse à injecter convenant à l'utilisation selon l'une quelconque des revendications 1 ou 2, caractérisée en ce qu'elle comporte une tête d'injection (40) présentant :
- un creux axial divisé en une chambre d'injection cylindrique (2) dans laquelle est mobile un piston (50) et en un conduit d'injection (4) reliant ladite chambre d'injection (2) à un orifice (5) d'injection dans un moule ;
- un conduit d'alimentation (6) qui débouche dans ledit creux axial ; et
- des moyens de non-retour sur le conduit d'injection (4) et sur le conduit d'alimentation (6), pour obturer le conduit d'injection et laisser ouvert le conduit d'alimentation quand le piston se déplace dans la chambre d'injection (2) en s'éloignant de l'orifice d'injection (5) afin que le creux axial s'alimente alors en matière à injecter, et pour ouvrir le conduit d'injection et fermer le conduit d'alimentation quand le piston se déplace en se rapprochant de l'orifice d'injection afin que de la matière à injecter soit alors expulsée à travers l'orifice d'injection ;
et en ce qu'une portion du conduit d'alimentation (6) et une portion du conduit d'injection (4), lorsque l'un ou l'autre est ouvert, est formée par un passage d'un obturateur commandé extérieurement (41, 42) faisant partie desdits moyens de non-retour, l'obturateur commandé du conduit d'alimentation et celui du conduit d'injection étant adjacents, et disposés à proximité de l'orifice d'injection (5).

7. Presse selon la revendication 6, caractérisée en ce que ledit passage (43) d'un obturateur commandé (41) qui forme une portion du conduit d'injection (4) lorsqu'il est ouvert, est convergent vers l'orifice d'injection (5).

8. Presse selon l'une quelconque des revendications 6 ou 7, caractérisée en ce que l'obturateur (41) du conduit d'injection (4) est tournant et à deux voies entre lesquelles il comporte un passage diamètral (43).

9. Presse selon la revendication 8, caractérisée en ce que le conduit d'alimentation (6), dans sa configuration ouverte, comporte lorsqu'on se rapproche du creux axial, un tronçon oblique (24) orienté selon une direction faisant un angle aigu avec la direction axiale dudit creux, puis un tronçon vertical (23) transversal à la direction axiale ; le tronçon vertical comportant à l'opposé du creux axial un prolongement (22) fermé par un bouchon (21) ; et en ce que l'obturateur (42) du conduit d'alimentation (6) est disposé à la jonction entre lesdits tronçon oblique (24), tronçon vertical (23) et prolongement (22), il est tournant à trois voies (44, 45, 46) et admet une position de remplissage où le conduit d'alimentation est ouvert et communique avec ledit prolongement, et une position d'injection où le conduit d'alimentation est fermé.

10. Presse selon la revendication 9, caractérisée en ce que l'obturateur (42) du conduit d'alimentation (6) présente un passage en Y avec une portion diamétrale (48) entre une première et une deuxième voies (44, 45), et une portion radiale (49) entre la portion diamétrale (48) et une troisième voie (46) ; en ce que dans ladite position de remplissage le trajet situé entre les troisième et deuxième voies (46, 45) fait partie du conduit d'alimentation (6), la portion diamétrale (48) étant coaxiale auxdits tronçon vertical (23) et prolongement (22) avec la première voie (44) en regard du prolongement (22) et la deuxième voie (45) en regard du creux axial, tandis que la portion radiale (49) est coaxiale audit tronçon oblique (24) avec la troisième voie (46) en regard du tronçon oblique ; et en ce que dans ladite position d'injection ladite portion diamétrale (48) est transversale auxdits tronçon vertical (23) et prolongement (22), avec la portion radiale au-dessus de la portion diamétrale.

11. Presse selon l'une quelconque des revendications 6 à 10, caractérisée en ce que la tête d'injection (40) comporte une transmission entre l'obturateur tournant (42) du conduit d'alimentation et celui (41) du conduit d'injection, adaptée à ce que quand le passage diamètral (43) de l'obturateur (41) du conduit d'injection fait partie de celui-ci (4), l'obturateur (42) du conduit d'alimentation est dans une position d'injection où il ferme ce conduit, et à ce que quand l'obturateur (41) du conduit d'injection ferme celui-ci, l'obturateur (42) du conduit d'alimentation est dans une position de remplissage où ce conduit est ouvert.

12. Presse selon la revendication 11, caractérisée en ce que la tête d'injection (40) comporte des moyens pour désaccoupler ladite transmission, afin que les obturateurs (41, 42) respectivement du conduit d'alimentation (6) et du conduit d'injection (4) admettent une configuration de nettoyage où tant le conduit d'alimentation que le conduit d'injection sont ouverts.

13. Presse selon l'une quelconque des revendications 3 à 12, caractérisée en ce que chaque partie convergente du conduit d'injection (4) a un rétrécissement de diamètre inférieur à 3 mm par cm de longueur axiale.

14. Presse selon l'une quelconque des revendications 3 à 13, caractérisée en ce que le conduit d'alimentation (6) a un diamètre égal ou légèrement inférieur à celui de la chambre d'injection (2), et ne comporte aucun rétrécissement.

15. Presse selon l'une quelconque des revendications 3 à 14, caractérisée en ce que l'obturateur commandé (9, 42) du conduit d'alimentation (6) et celui (9, 41) du conduit d'injection (4), admet ou admettent une configuration de nettoyage de la tête, où tant le conduit d'alimentation que le conduit d'injection sont ouverts.

16. Presse selon l'une quelconque des revendications 3 à 15, caractérisée en ce que le conduit d'alimentation (6), dans sa configuration ouverte, comporte lorsqu'on se rapproche du creux axial, un tronçon oblique (24) orienté selon une direction faisant un angle aigu avec la direction axiale dudit creux, puis un tronçon vertical (23) transversal à la direction axiale ; le tronçon vertical comportant à l'opposé du creux axial un prolongement (22) fermé par un bouchon (21).

17. Presse selon l'une quelconque des revendications 3 à 16, caractérisée en ce que le piston (50) comporte une surface concave (50') en regard du conduit d'injection, avec une portion saillante au moins en partie basse.

18. Presse selon l'une quelconque des revendications 3 à 17, caractérisée en ce qu'elle comporte en outre une unité d'alimentation (8) en matière à injecter, reliée à ladite tête d'injection (1, 40) par un tuyau (7) qui se raccorde audit conduit d'alimentation (6), ladite unité d'alimentation comportant une pompe doseuse de gavage (53) entre une trémie (51) contenant de la matière à injecter et un raccordement (58) audit tuyau, ladite pompe doseuse de gavage (53) comportant un cylindre (54) présentant un alésage divisé en une chambre doseuse (55) dans laquelle est mobile un piston (56) et en une première canalisation située entre la chambre doseuse (55) et ledit raccordement (58), une deuxième canalisation (59) reliant à la première canalisation un raccordement (60) prévu pour la trémie, un obturateur tournant (61) à trois voies étant disposé à la jonction entre les première et deuxième canalisations (57, 59), cet obturateur admettant une position d'admission où il relie la chambre doseuse (55) à la deuxième canalisation (59) tandis qu'il isole la chambre doseuse (55) de la première canalisation (57), et une position de refoulement où il relie la chambre doseuse (55) à la première canalisation (57) tandis qu'il isole la chambre doseuse (55) de la deuxième canalisation (59).

19. Presse selon la revendication 18, caractérisée en ce que la pompe doseuse de gavage (53) est placée de préférence adjacente à la trémie (51) et au-dessous de cette dernière.

## Claims

1. Use, for injecting a material able to form deposits such as a suspension of particles, notably metallic or ceramic particles, a sludge, or a plastic with fillers, of an injecting moulding machine, including an injection head (1, 40) having:
- an axial cavity divided into a cylindrical injection chamber (2) in which a piston (3, 50) is able to move and an injection channel (4) connecting the said injection chamber (2) to an orifice (5) for injecting into a mould;
- a feed channel (6) which opens out into the said axial cavity; and
- non-return means on the injection channel (4) and feed channel (6) to close off the injection channel and leave the feed channel open when the piston moves in the injection chamber (2) away from the injection orifice (5) so that the axial cavity is then fed with material to be injected, and to open the injection channel and close off the feed channel when the piston moves towards the injection orifice so that the material to be injected is then expelled through the injection orifice;
a machine in which a portion of the feed channel (6) and a portion of the injection channel (4), when one or the other is open, is formed by a passage in an externally controlled obturator (9; 41, 42) forming part of the said non-return means, the controlled obturator for the feed channel and the one for the injection channel being one and the same or adjacent and disposed close to the injection orifice (5).

2. Use according to Claim 1 for implementing cryogenic injection or pressure die-casting processes, where the solidification of the component in the mould or mould cavity is obtained by freezing the suspension or injected or cast material therein.

3. Injection moulding machine suitable for use according to either one of Claims 1 or 2, characterised in that it includes an injection head (1) having:
- an axial cavity divided into a cylindrical injection chamber (2) in which a piston (3) is able to move and an injection channel (4) connecting the said injection chamber (2) to an orifice (5) for injecting into a mould;
- a feed channel (6) which opens out into the said axial cavity; and
- non-return means on the injection channel (4) and feed channel (6) to close off the injection channel and leave the feed channel open when the piston moves in the injection chamber (2) away from the injection orifice (5) so that the axial cavity is then fed with material to be injected, and to open the injection channel and close off the feed channel when the piston moves towards the injection orifice so that the material to be injected is then expelled through the injection orifice;
and in that a portion of the feed channel (6) and a portion of the injection channel (4), when one or the other is open, is formed by a passage in an externally controlled obturator (9) forming part of the said non-return means, the controlled obturator for the feed channel and the one for the injection channel being one and the same, and disposed in the vicinity of the injection orifice (5), the said passage (28) in a controlled obturator (9) which forms a portion of the injection channel (4) when it is open, being convergent towards the injection orifice (5).

4. Machine according to Claim 3, characterised in that the controlled obturator for the feed channel and the one for the injection channel are combined in a single rotary three-way obturator (9) affording a filling position in which the injection channel (4) is closed off whilst the feed channel (6) is open, and an injection position in which the injection channel is open and the feed channel closed off.

5. Machine according to Claim 4, characterised in that the said three-way obturator (9) has a T-shaped passage with a diametral portion (28) between first and second ways (25, 26), and a radial portion (29) between the diametral portion (28) and a third way (27); in that in the said filling position the passage situated between the first and third ways (25, 27) forms part of the feed channel (6), the second way (26) being closed off whilst the radial portion (29) is coaxial with the injection channel (4) with the third way (27) facing the injection chamber (2); in that in the said injection position the third way (27) is closed off whilst the diametral portion (28) is coaxial with and forms part of the injection channel (4), with the first way (25) facing the injection chamber (2) and the second way (26) facing the injection orifice (5); and in that, in a cleaning position, none of the said first, second and third ways is closed off, the passage situated between the third and second ways (27, 26) forming part of the feed channel (6) whilst the diametral portion (28) is coaxial with and forms part of the injection channel (4), with the second way (26) facing the injection chamber (2) and the first way (25) facing the injection orifice (5).

6. Injection moulding machine suitable for use according to either one of Claims 1 or 2, characterised in that it includes an injection head (1) having:
- an axial cavity divided into a cylindrical injection chamber (2) in which a piston (3, 50) is able to move and an injection channel (4) connecting the said injection chamber (2) to an orifice (5) for injecting into a mould;
- a feed channel (6) which opens out into the said axial cavity; and
- non-return means on the injection channel (4) and feed channel (6) to close off the injection channel and leave the feed channel open when the piston moves in the injection chamber (2) away from the injection orifice (5) so that the axial cavity is then fed with material to be injected, and to open the injection channel and close off the feed channel when the piston moves towards the injection orifice so that the material to be injected is then expelled through the injection orifice;
and in that a portion of the feed channel (6) and a portion of the injection channel (4), when one or the other is open, is formed by a passage in an externally controlled obturator (41, 42) forming part of the said non-return means, the controlled obturator for the feed channel and the one for the injection channel being one and the same or adjacent and disposed close to the injection orifice (5).

7. Machine according to Claim 6, characterised in that the said passage (43) in a controlled obturator (41), which forms a portion of the injection channel (4) when it is open, is convergent towards the injection orifice (5).

8. Machine according to any one of Claims 6 or 7, characterised in that the obturator (41) for the injection channel (4) is rotary and with two ways, between which it has a diametral passage (43).

9. Machine according to Claim 8, characterised in that the feed channel (6), in its open configuration, has, when approaching the axial cavity, an oblique length (24) oriented in a direction forming an acute angle with the axial direction of the said cavity, and then a vertical length (23) transverse to the axial direction; the vertical length having, at the end opposite to the axial cavity, an extension (22) closed off by a plug (21); and in that the obturator (42) for the feed channel (6) is disposed at the junction between the said oblique length (24), vertical length (23) and extension (22), it is rotary, with three ways (44, 45, 46), and affords a filling position in which the feed channel is open and communicates with the said extension, and an injection position in which the feed channel is closed.

10. Machine according to Claim 9, characterised in that the obturator (42) for the feed channel (6) has a Y-shaped passage with a diametral portion (48) between first and second ways (44, 45), and a radial portion (49) between the diametral portion (48) and a third way (46); in that in the said filling position the passage situated between the third and second ways (46, 45) forms part of the feed channel (6), the diametral portion (48) being coaxial with the said vertical length (23) and extension (22) with the first way (44) facing the extension (22) and the second way (45) facing the axial cavity, whilst the radial portion (49) is coaxial with the said oblique length (24) with the third way (46) facing the oblique length; and in that in the said injection position the said diametral portion (48) is transverse to the said vertical length (23) and extension (22), with the radial portion above the diametral portion.

11. Machine according to any one of Claims 6 to 10, characterised in that the injection head (40) has a transmission between the rotary obturator (42) for the feed channel and the one (41) for the injection channel, adapted so that, when the diametral passage (43) in the obturator (41) for the injection channel forms part of the latter (4), the obturator (42) for the feed channel is in an injection position in which it closes off this channel, and so that, when the obturator (41) for the injection channel closes off the latter, the obturator (42) for the feed channel is in a filling position in which this channel is open.

12. Machine according to Claim 11, characterised in that the injection head (40) includes means for disconnecting the said transmission, so that the obturators (41, 42) respectively for the feed channel (6) and for the injection channel (4) afford a cleaning configuration in which both the feed channel and injection channel are open.

13. Machine according to any one of Claims 3 to 12, characterised in that each convergent part of the injection channel (4) has a narrowing in diameter of less than 3 mm per cm of axial length.

14. Machine according to any one of Claims 3 to 13, characterised in that the feed channel (6) has a diameter equal to or slightly less than that of the injection chamber (2), and has no narrowing.

15. Machine according to any one of Claims 3 to 14, characterised in that the controlled obturator (9, 42) for the feed channel (6) and the one (9, 41) for the injection channel (4) affords or afford a cleaning configuration for the head, in which both the feed channel and the injection channel are open.

16. Machine according to any one of Claims 3 to 15, characterised in that the feed channel (6), in its open configuration, has, when approaching the axial cavity, an oblique length (24) oriented in a direction forming an acute angle with the axial direction of the said cavity, and then a vertical length (23) transverse to the axial direction; the vertical length having, at the end opposite to the axial cavity, an extension (22) closed off by a plug (21).

17. Machine according to any one of Claims 3 to 16, characterised in that the piston (50) has a concave surface (50') facing the injection channel, with a projecting portion at least at the bottom.

18. Machine according to any one of Claims 3 to 17, characterised in that it also has a unit (8) for feeding material to be injected, connected to the said injection head (1, 40) by a tube (7) which is connected to the said feed channel (6), the said feed unit having a forced metering pump (53) between a hopper (51) containing material to be injected and a connection (58) to the said tube, the said forced metering pump (53) having a cylinder (54) with a bore divided into a metering chamber (55) in which a piston (56) is able to move and a first duct situated between the metering chamber (55) and the said connection (58), a second duct (59) connecting to the first duct a connection (60) provided for the hopper, a rotary three-way obturator (61) being disposed at the junction between the first and second ducts (57, 59), this obturator affording an inlet position in which it connects the metering chamber (55) to the second duct (59) whilst it isolates the metering chamber (55) from the first duct (57), and a discharge position in which it connects the metering chamber (55) to the first duct (57) whilst it isolates the metering chamber (55) from the second duct (59).

19. Machine according to Claim 18, characterised in that the forced metering pump (53) is preferably located adjacent to the hopper (51) and underneath it.

## Patentansprüche

1. Verwendung einer Spritzgußmaschine zum Spritzgießen eines Materiales, das geeignet ist, Ablagerungen zu bilden, wie z.B. einer Suspension von Partikeln, insbesondere von metallischen oder keramischen Partikeln, eines Schlammes oder eines Kunststoffes mit Füllstoffen, wobei die Maschine einen Spritzkopf (1, 40) umfaßt, der folgende Merkmale aufweist:
- einen axialen Hohlraum, der in eine zylindrische Spritzkammer (2), in der ein Kolben (3, 50) beweglich angebracht ist, und in einen Spritzkanal (4) unterteilt ist, welcher diese Spritzkammer (2) mit einer Öffnung (5) zum Einspritzen in eine Form verbindet;
- einen Zufuhrkanal (6), der in den axialen Hohlraum einmündet, und
- Mittel zum Sperren des Rücklaufs am Spritzkanal (4) und am Zufuhrkanal (6), um den Spritzkanal abzusperren und den Zufuhrkanal geöffnet zu lassen, wenn sich der Kolben in die Spritzkammer (2) bewegt, indem er sich von der Spritzöffnung (5) entfernt, damit sich der axiale Hohlraum dann mit Material zum Einspritzen füllt, und um den Spritzkanal zu öffnen und den Zuführkanal zu schließen, wenn sich der Kolben bewegt, wobei er sich der Spritzöffnung nähert, damit das einzuspritzende Material anschließend durch die Spritzöffnung ausgespritzt wird,
wobei in der Maschine ein Abschnitt des Zufuhrkanales (6) und ein Abschnitt des Spritzkanales (4), wenn der eine oder der andere geöffnet ist, von einem Durchlaß einer von außen gesteuerten Verschließeinrichtung (9; 41, 42) gebildet wird, die zu den genannten Mitteln zum Sperren des Rücklaufs gehört, und wobei die gesteuerte Verschließeinrichtung des Zufuhrkanals und die des Spritzkanals zusammenfallen oder nebeneinanderliegen und in der Nähe der Spritzöffnung (5) angeordnet sind.

2. Verwendung nach Anspruch 1 zur Ausführung kryogener Spritzgieß- oder Druckgußverfahren, bei denen die Erstarrung des Teiles in der Form oder in der Matrize durch Gefrieren der Suspension oder des eingespritzten oder gegossenen Werkstoffs in dieser erhalten wird.

3. Spritzgußmaschine zur Verwendung gemäß einem der Ansprüche 1 oder 2, dadurch gekennzeichnet, daß sie mit einem Spritzkopf (1) versehen ist, der folgende Merkmale aufweist:
- einen axialen Hohlraum, der in eine zylindrische Spritzkammer (2), in der ein Kolben (3) beweglich angebracht ist, und in einen Spritzkanal (4) aufgeteilt ist, der diese Spritzkammer (2) mit einer Öffnung (5) zum Einspritzen in eine Form verbindet;
- einen Zufuhrkanal (6), der in diesen axialen Hohlraum einmündet, und
- Mittel zum Sperren des Rücklaufs am Spritzkanal (4) und am Zufuhrkanal (6), um den Spritzkanal zu verschließen und den Zufuhrkanal geöffnet zu lassen, wenn sich der Kolben in der Spritzkammer (2) bewegt, indem er sich von der Spritzöffnung (5) entfernt, damit sich der axiale Hohlraum dann mit Material zum Einspritzen füllt, und um den Spritzkanal zu öffnen und den Zuführkanal abzuschließen, wenn sich der Kolben bewegt, indem er sich der Spritzöffnung nähert, damit das Material zum Einspritzen dann durch die Spritzöffnung ausgespritzt wird,
und dadurch, daß ein Abschnitt des Zufuhrkanals (6) und ein Abschnitt des Spritzkanals (4), wenn der eine oder der andere geöffnet ist, von einem Durchlaß einer von außen gesteuerten Verschließeinrichtung (9) gebildet wird, die zu diesen Mitteln zum Sperren des Rücklaufs gehört, wobei die gesteuerte Verschließeinrichtung des Zufuhrkanals und die des Spritzkanals zusammenfallen und in der Nähe der Spritzöffnung (5) angeordnet sind, und wobei dieser Durchlaß (28) einer gesteuerten Verschließeinrichtung (9), der, wenn er geöffnet ist, einen Abschnitt des Spritzkanals (4) bildet, zur Spritzöffnung (5) hin konvergent ausgebildet ist.

4. Maschine nach Anspruch 3, dadurch gekennzeichnet, daß die gesteuerte Verschließeinrichtung des Zufuhrkanals und die des Spritzkanals in einem einzigen Dreiwege-Drehverschluß (9) zusammengefaßt sind, der eine Füllstellung, in welcher der Spritzkanal (4) verschlossen und der Zufuhrkanal (6) geöffnet ist, und eine Einspritzstellung zuläßt, in welcher der Spritzkanal geöffnet und der Zufuhrkanal verschlossen ist.

5. Maschine nach Anspruch 4, dadurch gekennzeichnet, daß der Dreiwege-Verschluß (9) einen T-förmigen Durchlaß mit einem diametral verlaufenden Abschnitt (28) zwischen einem ersten und einem zweiten Anschluß (25, 26) und einen radialen Abschnitt (29) zwischen dem diametralen Abschnitt (28) und einem dritten Anschluß (27) aufweist, daß ferner in der Füllstellung der Durchlaß, der zwischen dem ersten und dem dritten Anschluß (25, 27) liegt, einen Teil des Zufuhrkanals (6) ausbildet, wobei der zweite Anschluß (26) gesperrt ist, während der radiale Abschnitt (29) koaxial zum Spritzkanal (4) liegt und der dritte Anschluß (7) der Spritzkammer (2) zugewandt ist, daß in der Spritzstellung der dritte Anschluß (27) gesperrt ist, während der diametrale Abschnitt (28) koaxial zm Spritzkanal (4) liegt und einen Teil desselben ausbildet, wobei der erste Anschluß (25) der Spritzkammer (2) und der zweite Anschluß (26) der Spritzöffnung (5) zugewandt ist, und dadurch, daß in einer Reinigungsstellung keiner der ersten, zweiten und dritten Anschlüsse gesperrt ist, wobei der Durchlaß zwischen dem dritten und dem zweiten Anschluß (27, 26) einen Teil des Zufuhrkanals (6) ausbildet, während der diametrale Abschnitt (28) koaxial zum Spritzkanal (4) liegt und einen Abschnitt desselben ausbildet, und wobei der zweite Anschluß (26) der Spritzkammer (2) und der erste Anschluß (26) der Spritzöffnung (5) zugewandt ist.

6. Spritzgußmaschine zur Verwendung nach einem der Ansprüche 1 oder 2, dadurch gekennzeichnet, daß sie einen Spritzkopf (40) umfaßt, der folgende Merkmale aufweist:
- einen axialen Hohlraum, der in eine zylindrische Spritzkammer (2), in der ein Kolben (50) beweglich angebracht ist, und in einen Spritzkanal (4) aufgeteilt ist, welcher diese Spritzkammer (2) mit einer Öffnung (5) zum Einspritzen in eine Form verbindet;
- einen Zufuhrkanal (6), der in diesen axialen Hohlraum mündet, und
- Mittel zum Sperren des Rücklaufs am Spritzkanal (4) und am Zufuhrkanal (6), um den Spritzkanal zu verschließen und den Zufuhrkanal geöffnet zu lassen, wenn sich der Kolben in der Spritzkammer (2) bewegt, indem er sich von der Spritzöffnung (5) entfernt, damit der axiale Hohlraum sich dann mit Material zum Einspritzen füllt, und um den Spritzkanal zu öffnen und den Zufuhrkanal zu schließen, wenn sich der Kolben bewegt, indem er sich der Spritzöffnung nähert, damit Einspritzmaterial dann durch die Spritzöffnung ausgespritzt wird,
und dadurch, daß ein Abschnitt des Zufuhrkanales (6) und ein Abschnitt des Spritzkanales (4), wenn der eine oder der andere geöffnet ist, von einem Durchlaß einer von außen gesteuerten Verschließeinrichtung (41, 42) gebildet wird, die zu diesen Mitteln zum Sperren des Rücklaufs gehört, wobei die gesteuerte Verschließeinrichtung des Zufuhrkanales und die des Spritzkanales benachbart zueinander liegen und in der Nähe der Spritzöffnung (5) angeordnet sind.

7. Maschine nach Anspruch 6, dadurch gekennzeichnet, daß der Durchgang (43) einer gesteuerten Verschließeinrichtung (41), der einen Abschnitt des Spritzkanales (4) ausbildet, wenn dieser geöffnet ist, in Richtung auf die Spritzöffnung (5) konvergent ausgebildet ist.

8. Maschine nach einem der Ansprüche 6 oder 7, dadurch gekennzeichnet, daß die Verschließeinrichtung (41) des Spritzkanals (4) verdrehbar und für zwei Anschlüsse ausgebildet ist, zwischen denen sie einen diametralen Durchlaß (43) aufweist.

9. Maschine nach Anspruch 8, dadurch gekennzeichnet, daß der Zufuhrkanal (6) in seiner geöffneten Stellung, wenn man sich dem axialen Hohlraum nähert, ein schräges Endstück (24), das in einer Richtung ausgerichtet ist, die einen spitzen Winkel mit der axialen Richtung dieses Hohlraums ausbildet, und anschließend ein vertikales Endstück (23), das quer zu der Axialrichtung verläuft, aufweist, wobei das vertikale Endstück auf seiner dem axialen Hohlraum gegenüberliegenden Seite mit einer Verlängerung (22) versehen ist, die von einem Stopfen (21) verschlossen wird, und daß die Verschließeinrichtung (42) für den Zufuhrkanal (6) an der Verbindungsstelle zwischen dem schrägen Endstück (24), dem vertikalen Endstück (23) und der Verlängerung (22) vorgesehen sowie als Dreiwege-(44, 45, 46)-Drehverschluß ausgebildet ist und eine Füllstellung, in der der Zufuhrkanal geöffnet ist und mit der Verlängerung in Verbindung steht, sowie eine Spritzstellung, in welcher der Zufuhrkanal geschlossen ist, zuläßt.

10. Maschine nach Anspruch 9, dadurch gekennzeichnet, daß die Verschließeinrichtung (42) für den Zufuhrkanal (6) einen Y-förmigen Durchlaß mit einem diametralen Abschnitt (48) zwischen einem ersten und einem zweiten Anschluß (44, 45) und einen radialen Abschnitt (49) zwischen dem diametralen Abschnitt (48) und einem dritten Anschluß (46) aufweist, daß in der Füllstellung der Durchlaß, der zwischen dem dritten und dem zweiten Anschluß (46, 45) angeordnet ist, einen Teil des Zufuhrkanals (6) ausbildet, wobei der diametrale Abschnitt (48) koaxial zu dem vertikalen Endstück (23) und der Verlängerung (22) liegt und der erste Anschluß (44) der Verlängerung (22) und der zweite Anschluß (45) dem axialen Hohlraum zugewandt ist, während der radiale Abschnitt (49) koaxial zu dem schrägen Endstück (24) liegt und der dritte Anschluß (46) dem schrägen Endstück zugewandt ist, und daß in der Spritzstellung der diametrale Abschnitt (48) quer zum vertikalen Endstück (23) und zu der Verlängerung (22) liegt, während der radiale Abschnitt oberhalb des diametralen Abschnitts angeordnet ist.

11. Maschine nach einem der Ansprüche 6 bis 10, dadurch gekennzeichnet, daß der Spritzkopf (40) zwischen dem Drehverschluß (42) des Zufuhrkanales und dem (41) des Spritzkanales ein Getriebe aufweist, das so ausgelegt ist, daß sich, wenn der diametrale Durchlaß (43) der Verschließeinrichtung (41) für den Spritzkanal einen Teil desselben (4) ausbildet, die Verschließeinrichtung (42) für den Zufuhrkanal in einer Spritzstellung befindet, in der sie diesen Kanal verschließt, und daß, wenn die Verschließeinrichtung (41) für den Spritzkanal diesen verschließt, sich die Verschließeinrichtung (42) für den Zufuhrkanal in einer Füllstellung befindet, in der dieser Kanal geöffnet ist.

12. Maschine nach Anspruch 11, dadurch gekennzeichnet, daß der Spritzkopf (40) Mittel zum Abkoppeln dieses Getriebes aufweist, damit jeweils die Verschließeinrichtungen (41, 42) des Zufuhrkanales (6) und des Spritzkanales (4) eine Reinigungskonfiguration zulassen, in der sowohl der Zufuhrkanal, wie auch der Spritzkanal geöffnet sind.

13. Maschine nach einem der Ansprüche 3 bis 12, dadurch gekennzeichnet, daß jeder konvergente Abschnitt des Spritzkanales (4) eine Verengung mit einem Durchmesser kleiner als 3 mm pro cm axialer Länge aufweist.

14. Maschine nach einem der Ansprüche 3 bis 13, dadurch gekennzeichnet, daß der Zufuhrkanal (6) einen Durchmesser, der gleich oder etwas kleiner als der der Spritzkammer (2) ist, aufweist und mit keiner Verengung versehen ist.

15. Maschine nach einem der Ansprüche 3 bis 14, dadurch gekennzeichnet, daß die gesteuerte Verschließeinrichtung (9, 42) für den Zufuhrkanal (6) und die (9, 41) für den Spritzkanal (4) eine Reinigungskonfiguration des Spritzkopfes zuläßt oder zulassen, in welcher sowohl der Zufuhrkanal, wie auch der Spritzkanal geöffnet ist.

16. Maschine nach einem der Ansprüche 3 bis 15, dadurch gekennzeichnet, daß der Zufuhrkanal (6) in seiner offenen Stellung, wenn man sich dem axialen Hohlraum nähert, ein schräges Endstück (24), das in einer Richtung ausgerichtet ist, die einen spitzen Winkel mit der axialen Richtung des Hohlraumes bildet, und anschließend einen vertikalen Endabschnitt (23) aufweist, der quer zu der axialen Richtung ist, wobei der vertikale Endabschnitt, dem axialen Hohlraum gegenüberliegend, eine Verlängerung (22) aufweist, die mit einem Stopfen (21) verschlossen ist.

17. Maschine nach einem der Ansprüche 3 bis 16, dadurch gekennzeichnet, daß der Kolben (50) eine dem Spritzkanal zugewandte konkave Oberfläche (50') mit einem zumindest an ihrem unteren Bereich vorragenden Abschnitt aufweist.

18. Maschine nach einem der Ansprüche 3 bis 17, dadurch gekennzeichnet, daß sie ferner eine Beschickungseinheit (8) für das einzuspritzende Material umfaßt, die mit dem Spritzkopf (1, 40) über einen Schlauch (7) verbunden ist, der seinerseits an den Zufuhrkanal (6) angeschlossen ist, wobei diese Beschickungseinheit eine Überdruck-Dosierpumpe (53) zwischen einem Trichter (51), der das einzuspritzende Material enthält, und einer Anschlußstelle (58) für den Schlauch aufweist, und wobei die Überdruck-Dosierpumpe (53) einen Zylinder (44), der mit einer Bohrung versehen ist, die in eine Dosierkammer (55), in welcher ein Kolben (56) beweglich angebracht ist, und in eine erste zwischen der Dosierkammer (55) und dem Anschluß (58) liegende Kanalisation aufgeteilt ist, ferner eine zweite Kanalisation (59), die mit der ersten Kanalisation einen für den Trichter vorgesehenen Anschluß (60) verbindet, sowie einen Dreiwege-Drehverschluß (61) enthält, der an der Verbindung zwischen der ersten und der zweiten Kanalisation (57, 59) vorgesehen ist und eine Zulaufstellung, in welcher er die Dosierkammer (55) an die zweite Kanalisation (59) anschließt, während er die Dosierkammer (55) gegenüber der ersten Kanalisation (57) abschließt, sowie eine Füllstellung, in der er die Dosierkammer (55) an die erste Kanalisation (57) anschließt, während er die Dosierkammer (55) gegenüber der zweiten Kanalisation (59) abschließt, aufweist.

19. Maschine nach Anspruch 18, dadurch gekennzeichnet, daß die Überdruckdosierpumpe (53) bevorzugt benachbart dem Trichter (51) und unterhalb dieses letzteren angebracht ist.
